**Europäisches Patentamt**

**European Patent Office**

**Office européen des brevets**

(19)

(11) Veröffentlichungsnummer : **0 459 213 B1**

(12)

# EUROPÄISCHE PATENTSCHRIFT

(45) Veröffentlichungstag der Patentschrift :
02.12.92 Patentblatt 92/49

(51) Int. Cl.⁵ : **B60R 21/13**

(21) Anmeldenummer : **91107798.0**

(22) Anmeldetag : **14.05.91**

(54) **Antrieb für einen Überrollbügel eines Kraftfahrzeuges.**

(30) Priorität : **01.06.90 DE 4017778**

(43) Veröffentlichungstag der Anmeldung :
**04.12.91 Patentblatt 91/49**

(45) Bekanntmachung des Hinweises auf die
Patenterteilung :
**02.12.92 Patentblatt 92/49**

(84) Benannte Vertragsstaaten :
**DE ES FR GB IT**

(56) Entgegenhaltungen :
**DE-C- 3 732 562**
**GB-A- 1 159 594**
**US-A- 4 557 502**

(73) Patentinhaber : **Bayerische Motoren Werke
Aktiengesellschaft
Patentabteilung AJ-3 Postfach 40 02 40
Petuelring 130
W-8000 München 40 (DE)**

(72) Erfinder : **Ball, Wilfried
Breslauer Strasse 24
W-8312 Dingolfing (DE)**
Erfinder : **Heiner, Lothar
Linkstrasse 31
W-8000 München 45 (DE)**
Erfinder : **Wicenec, Mathias
Waibelstrasse 16 c
W-8900 Augsburg (DE)**

EP 0 459 213 B1

Jouve, 18, rue Saint-Denis, 75001 PARIS

**Beschreibung**

Die Erfindung bezieht sich auf einen Antrieb für einen Überrollbügel eines Kraftfahrzeugs mit den im Oberbegriff des Patentanspruchs 1 angegebenen Merkmalen.

Ein bekannter derartiger Antrieb (DE-PS 37 32 562) sieht für das schnelle, sensorgesteuerte Aufrichten des Überrollbügels mindestens eine Kolben-Zylinder-Einheit vor, die unter der Wirkung einer Ausstoßfeder arbeitet. Zum willkürlichen Aufstellen und Absenken des Überrollbügels ist ein zusätzlicher Antrieb vorgesehen, der als Spindeltrieb aber auch als doppelt-wirkender Hydraulikzylinder ausgebildet sein kann. Damit der zusätzliche Antrieb das sensorgesteuerte schnelle Aufrichten nicht behindert, muß der Einfluß des zusätzlichen Antriebs auf den federbelasteten Stützkolben beim Vorliegen eines Crash-Signals aufhebbar sein. Diese Bauweise einer Antriebsvorrichtung für einen Überrollbügel bedingt einen hohen Bau- und Steuerungsaufwand, da verschiedene Systeme, wie Federkraftantrieb und hydraulischer Antrieb, für die an sich gleiche Funktion bereitgestellt werden müssen und ferner die Steuerung durch Schnittstellen Hydraulik/Elektronik/Mechanik kompliziert ist.

Der Erfindung liegt die Aufgabe zugrunde, eine Antriebsvorrichtung für einen Überrollbügel eines Kraftfahrzeugs zu schaffen, die weniger Bauaufwand bedingt und auch einfacher zu steuern ist.

Diese Aufgabe wird erfindungsgemäß dadurch gelöst, daß sowohl für das sensorgesteuerte Ausfahren als auch für das willkürliche Verlagern des Überrollbügels ein und derselbe Antriebsmotor vorgesehen ist. Der zweckmäßig durch einen Elektromotor gebildete Antriebsmotor wird zum willkürlichen Verlagern des Überrollbügels vorzugsweise mit einer unterhalb der Bordspannung des Kraftfahrzeugs liegenden Spannung und zum sensorgesteuerten Ausfahren mit zumindest annähernd der vollen Bordspannung beaufschlagt. Beim willkürlich gesteuerten Aus- und Einfahren mit der geringeren elektrischen Spannung wird der Überrollbügel mit einer reduzierten Geschwindigkeit ausgefahren oder eingefahren. Im Notfall, wenn ein entsprechender Sensor beispielsweise eine Überschlagssituation erkennt, wird dem Elektromotor die volle Bordspannung zugeführt und die Ausfahrgeschwindigkeit des Überrollbügels ist wesentlich höher. Eine eventuelle kurzzeitige Überbelastung des Elektromotors wird bei entsprechender Auslegung dieses Motors ohne Schaden überstanden. Da für den Überrollbügel nur eine einzige Antriebsart verwendet wird, wird nicht nur der Bauaufwand und damit auch das Gewicht wesentlich reduziert, sondern auch der Steuerungsaufwand.

Die Erfindung ist im folgenden anhand mehrerer in der Zeichnung dargestellter Ausführungsbeispiele näher erläutert. Es zeigt

Fig. 1 eine perspektivische Ansicht auf den hinteren Teil einer Cabriolet-Karosserie mit ausgefahrenen Überrollbügeln;

Fig. 2a und b schematische Ansichten in Fahrzeuglängsrichtung auf einen der beiden Überrollbügel in seinen beiden Extremlagen;

Fig. 3 eine Schrägansicht auf ein weiteres Ausführungsbeispiel;

Fig. 4 eine Schrägansicht auf eine nochmals abgeänderte Ausführungsform;

Fig. 5 eine der Fig. 4 entsprechende Ansicht in einer anderen Schaltstellung;

Fig. 6 eine Schrägansicht auf eine nochmals abgeänderte Ausführungsform und

Fig. 7 und 8 der Fig. 6 entsprechende Ansichten des in Fig. 6 gezeigten Überrollbügel-Antriebs in verschiedenen Betriebszuständen.

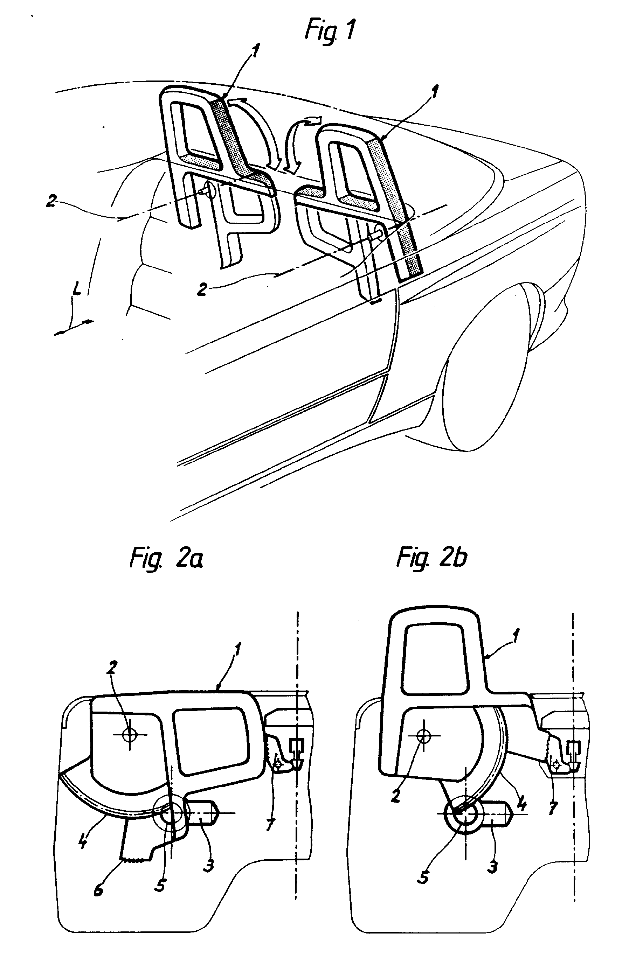

In Fig. 1 der Zeichnung ist der hintere Karosseriebereich eines Cabriolet-Fahrzeuges angedeutet. Bei dem dargestellten Ausführungsbeispiel sind zwei Überrollbügel 1 vorgesehen, die jeweils um eine in Fahrzeuglängsrichtung L verlaufende Schwenkachse 2 aus der in strichpunktierten angedeuteten abgesenkten Ruhelage in die in ausgezogenen Linien dargestellte Stützlage schwenkbar sind.

In Fig. 2a ist nochmals schematisch die abgesenkte Ruhelage und in Fig. 2b die aufgerichtete Stützlage jeweils eines Überrollbügels 1 dargestellt. Zwischen diesen beiden Extremlagen kann der Überrollbügel 1 willkürlich nach Belieben des Fahrzeugbenutzers, ggf. bei automatischer Verdeckbetätigung auch automatisch gesteuert, mit einer relativ langsamen Geschwindigkeit hin- und hergefahren werden. Beim sensorgesteuerten, sehr schnellen Ausfahren aus der Stellung nach Fig. 2a in die Stellung nach Fig. 2b stehen für die Ausfahrbewegung nur wenige Zehntelsekunden zur Verfügung. Sowohl für das eben erwähnte sensorgesteuerte Ausfahren als auch für das wesentlich langsamere willkürliche Verlagern ist ein und derselbe Antriebsmotor, nämlich der Elektromotor 3, vorgesehen. Wie bereits erwähnt, ist der Elektromotor 3 zum willkürlichen Verlagern mit einer unterhalb der Bordspannung des Kraftfahrzeugs liegenden Spannung und zum sensorgesteuerten, schnellen Ausfahren mit zumindest annähernd der vollen Bordspannung beaufschlagbar. Bei dem Ausführungsbeispiel nach den Figuren 2a und 2b ist der Überrollbügel 1 mit einem zur Schwenkachse 2 koaxialen Teil-Zahnkranz 4 versehen, in den ein vom Elektromotor 3 antreibbares Ritzel 5 eingreift. Der Überrollbügel 1 weist ferner eine Rastverzahnung 6 auf, durch die er in der aufgerichteten Stützlage durch eine federbelastete Rastklinke 7 fixiert wird.

Dadurch, daß für beide Bewegungsarten, das schnelle Ausfahren und das willkürliche Hin- und Herfahren, nur ein einziger Elektromotor benutzt wird, reduziert sich wegen des Entfalls eines zusätzlichen Antriebs nicht nur der Bauaufwand beträchtlich, sondern es kann auch auf das beim Stand der Technik erforderliche Abkoppeln des langsamen zusätzlichen Antriebes verzichtet werden, wenn der schnelle Antrieb in Funktion ist. Die Abkoppelmechanismen und der dazu treibende Steuerungsaufwand sind nicht mehr erforderlich.

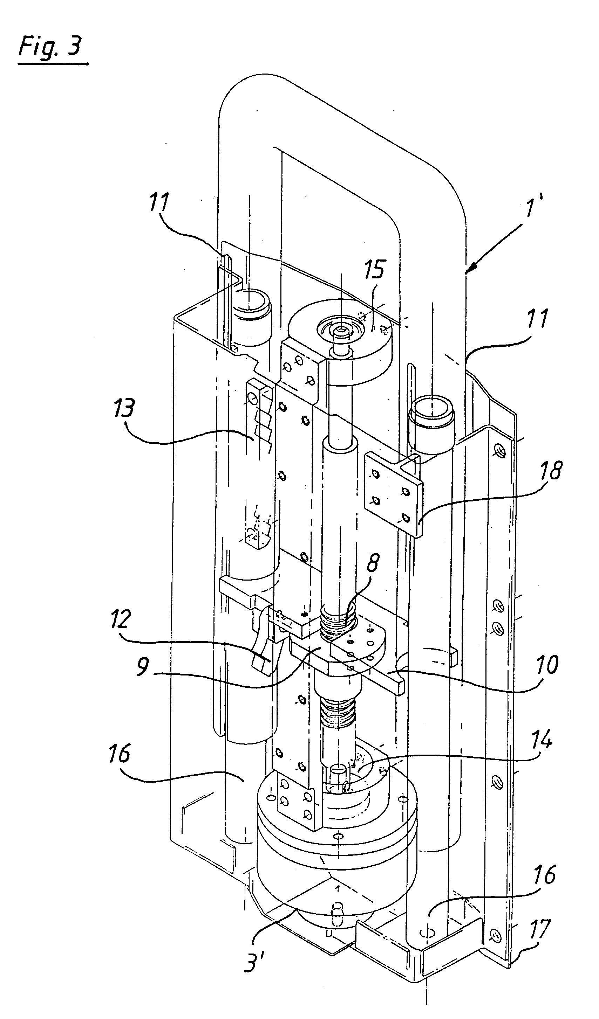

Bei dem in Fig. 3 gezeigten Überrollbügel 1′ handelt es sich um einen geradlinig im wesentlichen in vertikaler Richtung verschiebbaren Überrollbügel. Zur Verlagerung aus einer abgesenkten Ruhelage in eine aufgerichtete Stützlage dient eine in Verschieberichtung verlaufende, axial gegenüber dem Aufbau des Kraftfahrzeugs abgestützte und von dem Elektromotor 3′ antreibbare Gewindespindel 8, die mit einer mit dem Überrollbügel 1′ verbundene Gewindemutter 9 zusammenwirkt. Die Gewindemutter 9 ist an einem Querjoch 10 angeordnet, das mit seinen Enden jeweils mit einem der nach unten gerichteten U-Schenkel 11 des U-förmigen Überrollbügels 1′ in geeigneter Weise verbunden ist. An dem Querjoch 10 ist ferner eine federbelastete Rastklinke 12 gelagert, die in der ausgefahrenen Lage des Überrollbügels 1′ mit einer aufbaufest abgestützten Rastverzahnung 13 zusammenwirkt. Die Gewindespindel 8 kann über eine gummielastische Kupplung 14 mit dem Elektromotor 3′ verbunden sein. Gemäß Fig. 3 ist die Gewindespindel 8 an ihrem dem Elektromotor 3′ abgewandten Ende gegenüber dem Fahrzeugaufbau in einem Drehlager 15 abgestützt. Wie man in der Zeichnung weiter erkennt, ist der Überrollbügel 1′ mit seinen U-Schenkeln 11 durch aufbaufest abgestützte Führungsrohre 16 geführt. Die Führungsrohre 16 befinden sich bei dem dargestellten Ausführungsbeispiel in einem flachen Gehäuse 17 und sind an dessen Boden befestigt und an dessen oberem Rand durch die angedeuteten T-Profile 18 gehalten.

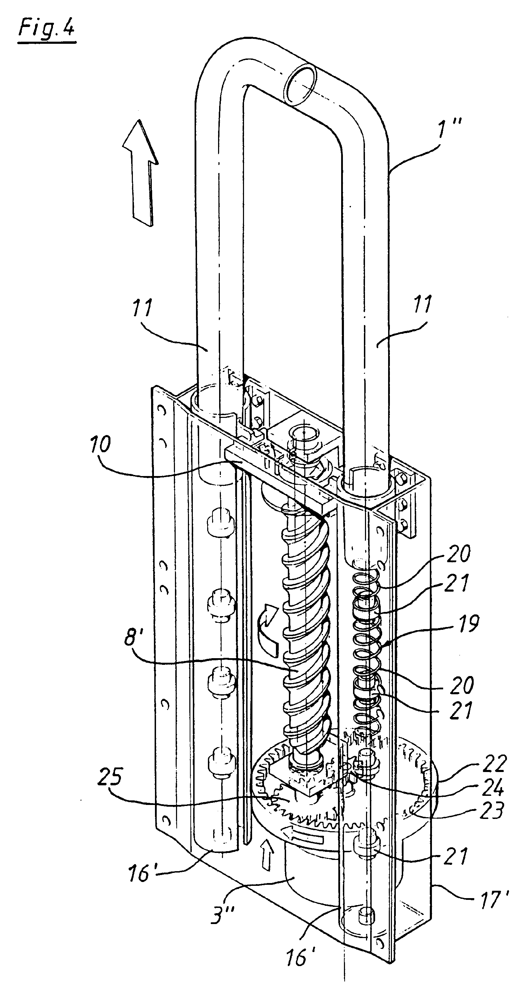

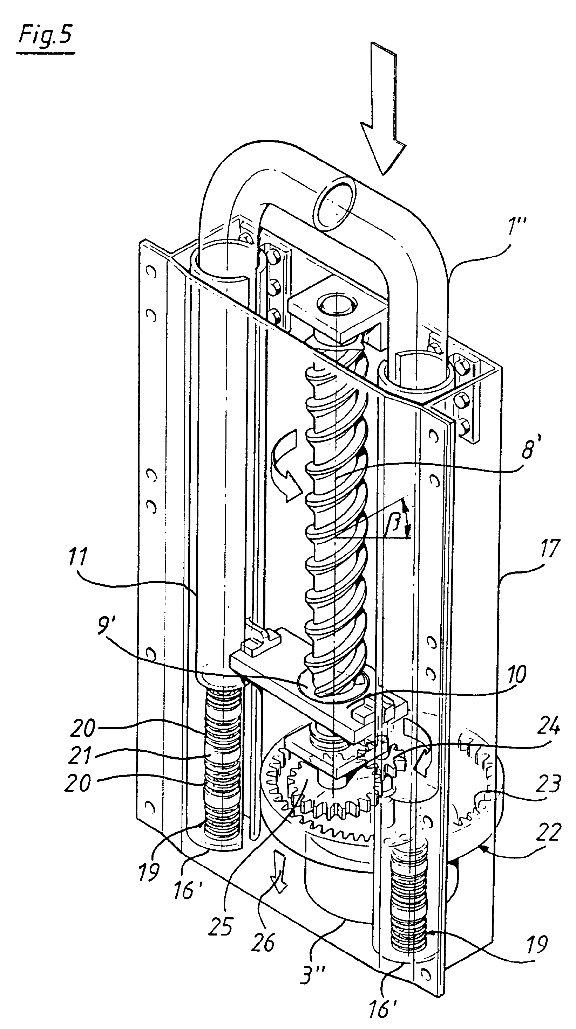

Bei dem Ausführungsbeispiel nach den Figuren 4 und 5 ist ebenfalls ein Gehäuse 17′ vorgesehen, das jeden Überrollbügel 1″ aufnimmt und über etwas anders ausgebildete Führungsrohre 16′ führt. Bei diesem Ausführungsbeispiel sind Federspeicher 19 vorgesehen, die die Ausfahrbewegung des Überrollbügels 1″ in die aufgerichtete Stützlage unterstützen. Die Gewindespindel 8′ ist sowohl an ihrem oberen Ende als auch an ihrem unteren Ende über entsprechende Drehlager 15 gegenüber dem Fahrzeugaufbau axial abgestützt und gelagert. Die Gewindespindel 8′ arbeitet ebenfalls mit einer Gewindemutter 9′ zusammen, die wiederum in einem Querjoch 10′ aufgenommen ist, das mit seinen Enden jeweils mit einem U-Schenkel 11 des Überrollbügels 1″ verbunden ist.

Der Elektromotor 3″, die Gewindespindel 8′, die Federspeicher 19 und die Führungsrohre 16 sind auch bei diesem Ausführungsbeispiel in einem Gehäuse 17′ aufgenommen, das an dem (nicht dargestellten) Fahrzeugaufbau befestigbar ist. Wie das Gehäuse 17 des Ausführungsbeispiels nach Fig. 3 ist auch das Gehäuse 17′ des Ausführungsbeispiels nach den Figuren 4 und 5 so ausgebildet, daß es an der zwischen dem Fahrgastraum und dem Gepäckraum des Fahrzeugs vorgesehenen Trennwand befestigt werden kann.

Wie man in den Figuren 4 und 5 erkennt, ist jeder Federspeicher 19 durch in den Führungsrohren 16′ angeordnete Druckfedern 20 gebildet. Dabei sind in jedem Führungsrohr 16′ mehrere hintereinandergeschaltete Druckfedern 20 angeordnet, zwischen denen Führungsstücke 21 vorgesehen sind.

Die Gewindespindel 8′ des Ausführungsbeispiels nach den Figuren 4 und 5 hat ein steilgängiges Gewinde, dessen Steigungswinkel β zwischen 35° und 55°, zweckmäßig bei etwa 45°, liegt. Das Gewinde ist ein doppelgängiges Gewinde.

Die Gewindespindel 8′ ist von dem Elektromotor 3″ über zwei verschiedene Übersetzungsstufen antreibbar. Hierzu ist ein von dem Elektromotor 3″ antreibbares Doppelzahnrad 22 vorgesehen, das axial zwischen zwei Schaltstellungen verschiebbar ist. Das Doppelzahnrad 22 weist eine Innenverzahnung 23 mit großem Durchmesser und koaxial dazu, aber mit axialem Versatz eine Außenverzahnung 24 mit kleinem Durchmesser auf. In der Schaltstellung gemäß Fig. 4, in der ein schnelles Ausfahren des Überrollbügels 1″ möglich ist, kämmt die Innenverzahnung 23 großen Durchmessers mit einem Antriebszahnrad 25 der Gewindespindel 8′. In der anderen Schaltstellung des Doppelzahnrads 22, die in Fig. 5 ersichtlich ist, kämmt die im Durchmesser wesentlich kleinere Außenverzahnung 24 des Doppelzahnrads 22 mit dem schon erwähnten Antriebszahnrad 25 der Gewindespindel 8′. In dieser Schaltstellung kann der Überrollbügel 1″ wesentlich langsamer ausgefahren und auch gegen die Wirkung der Federspeicher 19 wieder willkürlich eingefahren werden.

Die Schaltstellung nach Fig. 4, bei der die Innenverzahnung 23 mit dem großem Durchmesser in Eingriff mit dem Antriebszahnrad 25 der Gewindespindel 8′ steht, ist die Schaltstellung, in der sich der Antrieb normalerweise befindet. Erst zum willkürlichen Verlagern des Überrollbügels 1″ wird, ähnlich wie bei einem Anlasser-Motor, das Doppelzahnrad 22 im Sinne des Pfeiles 26 in Fig. 5 nach unten verlagert, worauf dann die Außenverzahnung 24 mit dem kleinen Durchmesser in Eingriff mit dem Antriebszahnrad 25 kommt.

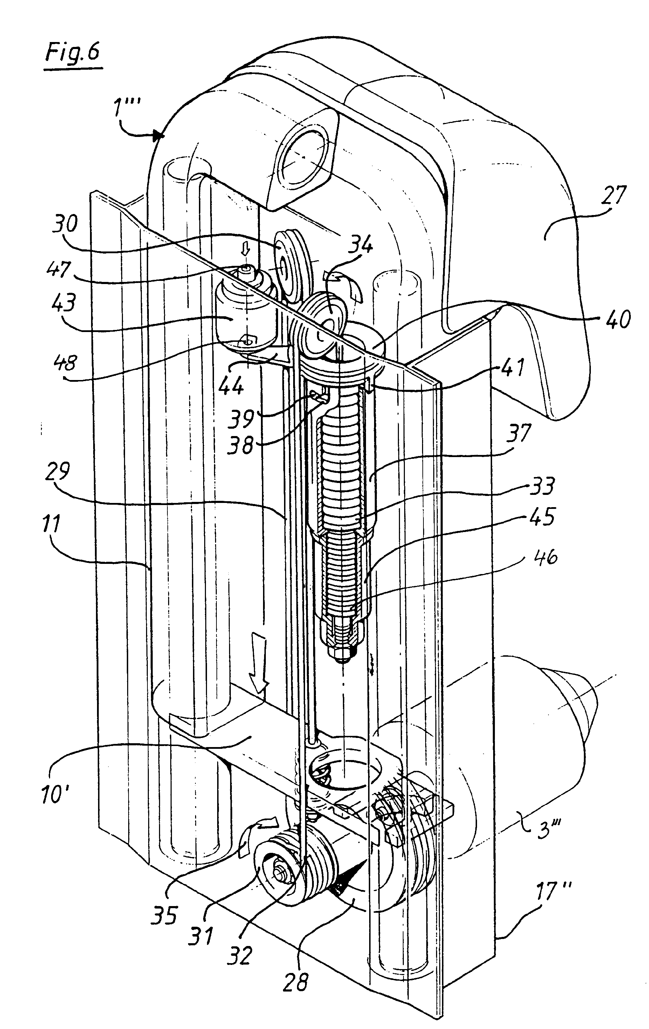

Bei dem weiteren Ausführungsbeispiel nach den Figuren 6 bis 8 ist ebenfalls ein U-förmiger Überrollbügel 1‴ vorgesehen, der in Richtung seiner nach unten gerichteten U-Schenkel 11 verschiebbar geführt ist. In seinem oberen Bereich kann auch noch eine Kopfstütze 27 angeordnet sein. Der Überrollbügel 1‴ ist zusammen mit seiner Führung und den Antriebselementen ebenfalls im wesentlichen in einem Gehäuse 17″ aufgenommen. Auch bei diesem Ausführungsbeispiel dient der Elektromotor 3‴, dessen Antriebseinfluß nie aufgehoben ist, zum Ein- und Ausfahren des Überrollbügels 1‴.

Der an dem Gehäuse 17″ befestigte Elektromotor 3‴ treibt eine Seilrolle 28 an, mit der ein Zugseil 29 verbunden ist, das andererseits mit dem Überrollbügel 1‴ in Verbindung steht. Das Zugseil 29 verläuft bei dem dargestellten Ausführungsbeispiel von der Seilrolle 28 nach oben zu einer Umlenkrolle 30 und von dort nach unten zu einem die U-Schenkel 11 des Überrollbügels 1‴ verbindenden Querjoch 10′, an dem es befestigt ist.

Die Seilrolle 28 weist ferner einen Rollenabschnitt 31 mit kleinerem Aufrolldurchmesser auf, auf dem ein Spannseil 32 festgelegt ist. Das andere Ende des Spannseils 32 ist mit einer die Ausfahrbewegung des Überrollbügels 1‴ unterstützenden Antriebsfeder 33 verbunden. Wie man erkennt, ist das Spannseil von dem Rollenabschnitt 31 der Seilrolle 28 ebenfalls nach oben zu einer weiteren Umlenkrolle 30 und von dort wieder nach unten zu der Antriebsfeder 33 geführt.

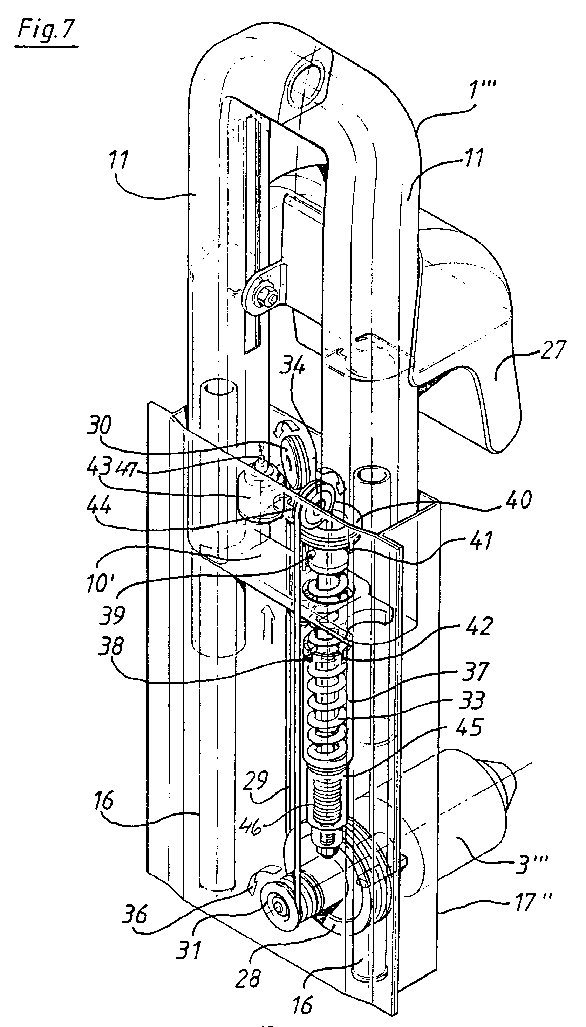

Fig. 6 zeigt den Überrollbügel in seiner völlig eingefahrenen Stellung, in die er durch eine Drehbewegung der Seilrolle 28 und des Rollenabschnitts 31 im Sinne des Pfeiles 35 gelangt ist. Das Zugseil 29 wird dabei von der Seilrolle 28 abgewickelt und der Überrollbügel 1‴ kann sich nach unten bewegen. Die Antriebsfeder 33 ist vollkommen zusammengedrückt und befindet sich in ihrem gespannten Zustand. Aus diesem Zustand kann sie sensorgesteuert in der nachfolgend beschriebenen Weise entriegelt werden. Nach dem Entriegeln (Fig. 7) übt sie auf das Spannseil 32 eine hohe Zugkraft aus, und unterstützt dadurch die Drehbewegung der Seilrolle 28, die sensorgesteuert durch den Elektromotor 3‴ im Sinne des Drehpfeiles 36 angetrieben wird. Über das Zugseil 29 wird dabei das Querjoch 10′ und damit der Überrollbügel 1‴ sehr schnell nach oben gezogen.

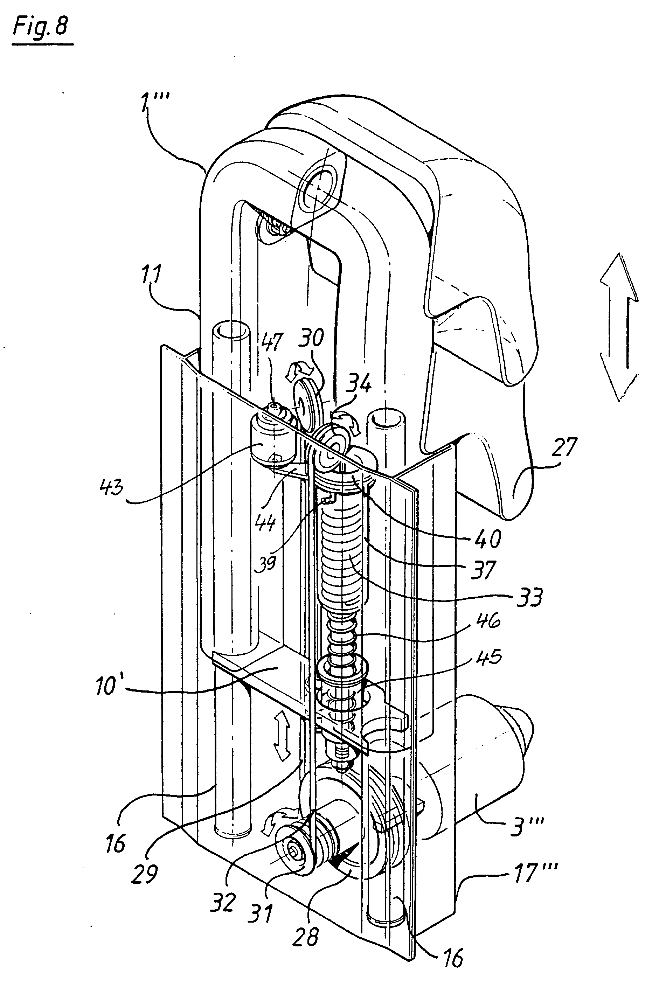

Die Antriebsfeder 33 stützt sich mit ihrem oberen Ende an dem Gehäuse 17″ und mit ihrem unteren Ende am Boden einer verlagerbaren Federhülse 37 ab, die gegenüber dem Gehäuse 17″ ver- und entriegelbar ist. Hierzu hat die Federhülse 37 an ihrem oberen Ende wenigstens einen winkelförmigen Schlitz 38 für einen aufbaufesten Haltezapfen 39. Ein Abschnitt des winkelförmigen Schlitzes 38 verläuft in Verlagerungsrichtung und ist zum oberen Rand der Federhülse 37 hin offen. Der andere Abschnitt des winkelförmigen Schlitzes 38 verläuft annähernd quer. Er hat bei dem dargestellten Ausführungsbeispiel jedoch zum offenen Abschnitt eine solche Neigung schräg nach oben, daß sich die Federhülse 37 dann, wenn sie sich verdrehen kann, allein aufgrund der Wirkung der Antriebsfeder 33 soweit verdreht, daß die Federhülse 37 von dem Haltezapfen 39 freikommt. Hierzu ist die Federhülse 37 begrenzt von einer Verriegelungsstellung (Fig. 6) in eine Freigabestellung (Fig. 7) verdrehbar. Bei dem dargestellten Ausführungsbeispiel wird die Federhülse 37 in der Verriegelungsstellung durch eine Klauenscheibe 40 gehalten, die mit axial nach unten abstehenden Klauen 41 in randseitige Längsschlitze 42 der Federhülse 37 eingreifen kann. In der Verriegelungsstellung (Fig. 6 und Fig. 8) wird die Klauenscheibe 40 durch einen Elektromagneten 43 gehalten, der mit einem Haltestift in eine Bohrung an einem radialen Arm 44 der Klauenscheibe 40 eingreifen kann. Wird der Arm 44 freigegeben (Fig. 7), so kann sich die Federhülse 37 unter der Wirkung der Antriebsfeder 33 begrenzt soweit verdrehen, daß sie von dem Haltezapfen 39 freikommt und nach unten verlagert werden kann.

Beim willkürlichen Verlagern des Überrollbügels 1‴ verbleibt gemäß Fig. 8 die Antriebsfeder 33 auch stets in ihrem gespannten Zustand. Wird die Klauenscheibe 40 dabei sensorgesteuert freigegeben, so kann die Antriebsfeder 33 auch aus einer Zwischenstellung heraus das vollständige Ausfahren des Überrollbügels 1 in die obere Extremlage unterstützen, so daß dieses restliche Ausfahren wiederum sehr schnell erfolgt.

Das untere Ende der Antriebsfeder 33 ist nicht direkt mit dem von der Umlenkrolle 34 nach unten geführten freien Ende des Spannseiles 32 verbunden. Dieses Spannseil 32 ist mit dem Boden einer nach oben offenen Hülse 45 verbunden, die eine weitere Druckfeder 46 aufnimmt. Diese gegenüber der Antriebsfeder 33 deutlich schwächere Druckfeder 46 liegt mit ihrem oberen Ende von unten am Boden der Federhülse 37 an. Sie unterstützt das Ausfahren des Überrollbügels 1‴, wenn dieser willkürlich verfahren wird und dient darüber hinaus zum Längenausgleich zwischen dem Zugseil 29 und dem Spannseil 32, die beide an unterschiedlichen Durchmessern der Seilrolle 38 auf- bzw. abgewickelt werden.

**Patentansprüche**

1. Antrieb für einen Überrollbügel eines Kraftfahrzeuges, der sensorgesteuert schnell aus einer abgesenkten Ruhelage in eine aufgerichtete Stützlage überführbar und willkürlich gesteuert mit langsamer Geschwindigkeit zwischen diesen beiden Lagen hin und her verlagerbar ist, dadurch gekennzeichnet, daß sowohl für das sensorgesteuerte Ausfahren als auch für das willkürliche Verlagern ein und derselbe Antriebsmotor (3, 3′, 3″, 3‴) vorgesehen ist.

2. Antrieb nach Anspruch 1, dadurch gekennzeichnet, daß der Antriebsmotor ein Elektromotor (3, 3′, 3″, 3‴) ist.

3. Antrieb nach Anspruch 2, dadurch gekennzeichnet, daß der Elektromotor (3, 3′, 3″, 3‴) zum willkürlichen Verlagern mit einer unterhalb der Bordspannung des Kraftfahrzeugs liegenden Spannung und zum sensorgesteuerten Ausfahren mit annähernd der vollen Bordspannung beaufschlagbar ist.

4. Antrieb nach Anspruch 1 für einen um eine Schwenkachse drehbaren Überrollbügel, dadurch gekennzeichnet, daß der Überrollbügel (1) einen zur Schwenkachse (2) koaxialen Teil-Zahnkranz (4) aufweist, in den ein vom Antriebsmotor (3) antreibbares Ritzel (5) eingreift.

5. Antrieb nach Anspruch 1 für einen zumindest annähernd geradlinig verschiebbaren Überrollbügel, gekennzeichnet durch eine in Verschieberichtung verlaufende, axial gegenüber dem Aufbau des Kraftfahrzeugs abgestützte und von dem Antriebsmotor (3', 3") antreibbare Gewindespindel (8, 8'), die mit einer mit dem Überrollbügel (1, 1') verbundenen Gewindemutter (9, 9') zusammenwirkt.

6. Antrieb nach Anspruch 5 für einen U-förmigen Überrollbügel, dessen U-Schenkel nach unten gerichtet sind, dadurch gekennzeichnet, daß die Gewindemutter (9, 9') an einem Querjoch (10, 10') angeordnet ist, das mit seinen Enden jeweils mit einem U-Schenkel (11) verbunden ist.

7. Antrieb nach Anspruch 5, dadurch gekennzeichnet, daß an dem Querjoch (10) eine federbelastete Rastklinke (12) gelagert ist, die in der ausgefahrenen Lage des Überrollbügels (1') mit einer aufbaufest abgestützten Rastverzahnung (13) zusammenwirkt.

8. Antrieb nach Anspruch 5, dadurch gekennzeichnet, daß die Gewindespindel (8) über eine gummielastische Kupplung (14) mit dem Elektromotor (3') verbunden ist.

9. Antrieb nach Anspruch 5, dadurch gekennzeichnet, daß die Gewindespindel (8, 8') an ihrem dem Elektromotor (3, 3") abgewandten Ende gegenüber dem Fahrzeugaufbau in einem Drehlager abgestützt ist.

10. Antrieb nach Anspruch 1, dadurch gekennzeichnet, daß wenigstens ein Federspeicher (19) vorgesehen ist, der die Ausfahrbewegung des Überrollbügels (1") in die aufgerichtete Stützlage unterstützt.

11. Antrieb nach Anspruch 5, dadurch gekennzeichnet, daß der Überrollbügel (1', 1") mit seinen U-Schenkeln (11) durch aufbaufest abgestützte Führungsrohre (16, 16') geführt ist.

12. Antrieb nach den Ansprüchen 10 und 11, dadurch gekennzeichnet, daß der Antriebsmotor (3"), die Gewindespindel (8'), der Federspeicher (19) und die Führungsrohre (16') in einem Gehäuse (17') aufgenommen sind, das am Fahrzeugaufbau befestigbar ist.

13. Antrieb nach Anspruch 12, dadurch gekennzeichnet, daß das Gehäuse (17, 17') an der zwischen Fahrgastraum und Gepäckraum vorgesehenen Trennwand befestigbar ist.

14. Antrieb nach Anspruch 10, dadurch gekennzeichnet, daß der Federspeicher (19) durch in den Führungsrohren (16') angeordnete Druckfedern (20) gebildet ist.

15. Antrieb nach Anspruch 14, dadurch gekennzeichnet, daß in jedem Führungsrohr (16') mehrere hintereinandergeschaltete Druckfedern (20) angeordnet sind, zwischen denen Führungsstücke (21) vorgesehen sind.

16. Antrieb nach Anspruch 5, dadurch gekennzeichnet, daß die Gewindespindel (8') ein steilgängiges Gewinde, zweckmäßig mit einem Steigungswinkel ($\beta$) zwischen 35° und 55°, hat.

17. Antrieb nach Anspruch 16, dadurch gekennzeichnet, daß das Gewinde ein doppelgängiges Gewinde ist.

18. Antrieb nach Anspruch 5, dadurch gekennzeichnet, daß die Gewindespindel (8') von dem Elektromotor (3") über zwei verschiedene Übersetzungsstufen antreibbar ist.

19. Antrieb nach Anspruch 18, dadurch gekennzeichnet, daß der Elektromotor (3") ein axial zwischen zwei Schaltstellungen verschiebbares Doppelzahnrad (22) antreibt, das eine Innenverzahnung (23) mit großem Durchmesser und koaxial dazu, aber mit axialem Versatz, eine kleine Außenverzahnung (24) aufweist, wobei in der einen Schaltstellung die Innenverzahnung (23) und in der anderen Schaltstellung die Außenverzahnung (24) mit einem Antriebszahnrad (25) der Gewindespindel (8') kämmt.

20. Antrieb nach Anspruch 1 für einen U-förmigen Überrollbügel, der in Richtung seiner nach unten gerichteten U-Schenkel verschiebbar geführt ist, dadurch gekennzeichnet, daß der Antriebsmotor (3''') eine Seilrolle (28) antreibt, mit der ein Zugseil (29) verbunden ist, das andererseits mit dem Überrollbügel (1''') in Verbindung steht.

21. Antrieb nach Anspruch 20, dadurch gekennzeichnet, daß das Zugseil (29) von der Seilrolle (28) nach oben zu einer Umlenkrolle (30) und von dort nach unten zu einem die U-Schenkel (11) des Überrollbügels (1‴) verbindenden Querjoch (10′) verläuft, an dem es befestigt ist.

22. Antrieb nach Anspruch 20, dadurch gekennzeichnet, daß die Seilrolle (28) einen Rollenabschnitt (31) mit kleinerem Aufrolldurchmesser aufweist, auf dem ein Spannseil (32) festgelegt ist, dessen anderes Ende mit wenigstens einer die Ausfahrbewegung des Überrollbügels (1‴) unterstützenden Antriebsfeder (33) verbunden ist.

23. Antrieb nach Anspruch 22, dadurch gekennzeichnet, daß das Spannseil (32) von dem Rollenabschnitt (31) der Seilrolle (28) nach oben zu einer Umlenkrolle (34) und von dort wieder nach unten zu der Antriebsfeder (33) geführt ist.

24. Antrieb nach Anspruch 22 oder 23, dadurch gekennzeichnet, daß die Antriebsfeder (33) in ihrem gespannten Zustand sensorgesteuert entriegelbar ist.

25. Antrieb nach Anspruch 24, dadurch gekennzeichnet, daß die Antriebsfeder (33) sich mit einem Ende aufbaufest und mit dem anderen Ende am Boden einer verlagerbaren Federhülse (37) abstützt, die aufbaufest ver- und entriegelbar ist.

26. Antrieb nach Anspruch 25, dadurch gekennzeichnet, daß die Federhülse (37) an einem Ende einen winkelförmigen Schlitz (38) für einen aufbaufesten Haltezapfen (39) aufweist, von dem ein Abschnitt in Verlagerungsrichtung verläuft und zum Rand der Federhülse hin offen ist, wobei der andere Abschnitt des Schlitzes (38) annähernd quer verläuft.

27. Antrieb nach Anspruch 26, dadurch gekennzeichnet, daß der quer gerichtete Abschnitt zum offenen Abschnitt hin schräg nach oben geneigt verläuft.

28. Antrieb nach Anspruch 26 oder 27, dadurch gekennzeichnet, daß die Federhülse (37) begrenzt von einer Verriegelungsstellung (Fig. 6) in eine Freigabstellung (Fig. 7) verdrehbar ist.

29. Antrieb nach Anspruch 28, dadurch gekennzeichnet, daß die Federhülse (37) durch eine Klauenscheibe (40) verdrehbar ist, die axiale Klauen (41) zum Eingriff in randseitige Längsschlitze (42) der Federhülse (37) aufweist.

30. Antrieb nach Anspruch 29, dadurch gekennzeichnet, daß die Klauenscheibe (40) in radialem Abstand von ihrer Drehachse mit einer Bohrung (48) versehen ist, in die ein durch einen Elektromagneten (43) längs verlagerbarer Haltestift (47) eingreifen kann.

31. Antrieb nach Anspruch 30, dadurch gekennzeichnet, daß die Bohrung (48) in einem radialen Arm (44) der Klauenscheibe (40) vorgesehen ist.

## Claims

1. A drive for a roll bar of a motor vehicle which, under sensor control, can be rapidly moved from a lower inoperative position into a raised supporting position and can be moved up and down under arbitrary control at a slower speed between these two positions, characterised in that the same drive motor (3, 3′, 3″, 3‴) is provided for sensor-controlled extension and for arbitrary displacement.

2. A drive according to claim 1, characterised in that the drive motor is an electric motor (3, 3′, 3″, 3‴).

3. A drive according to claim 2, characterised in that the electric motor (3, 3′, 3″, 3‴) can be energised by a voltage considerably below the vehicle supply voltage for arbitrary displacement and with approximately the full vehicle supply voltage for sensor-controlled extension.

4. A drive according to claim 1 for a roll bar rotatable around a pivot axis, characterised in that the roll bar (1) has a partial gear rim (4) coaxial with the pivot axis (2) and engaging a pinion (5) driven by the motor (3).

5. A drive according to claim 1 for a roll bar movable at least approximately in a straight line, characterised by a threaded spindle (8, 8′) which extends in the direction of displacement, is axially mounted relative to the vehicle body, is drivable by the motor (3′, 3″) and co-operates with a threaded nut (9, 9′) connected to the roll bar (1, 1′).

6. A drive according to claim 5 for a U-shaped roll bar having downwardly-extending limbs, characterised in that the threaded nut (9, 9′) is disposed on a yoke (10, 10′), the ends of which are each connected to a limb (11) of the U.

7. A drive according to claim 5, characterised in that a spring-loaded pawl (12) is mounted on the yoke (10) and, when the roll bar (1′) is in the extended position, co-operates with locking teeth (13) mounted on and secured to the vehicle body.

8. A drive according to claim 5, characterised in that the threaded spindle (8) is connected to the electric motor (3') by an elastomeric coupling (14).

9. A drive according to claim 5, characterised in that the end of the threaded spindle (8, 8') remote from the electric motor (3, 3') is mounted on the vehicle body via a pivot bearing.

10. A drive according to claim 1, characterised in that at least one spring accumulator (19) is provided and assists the motion of the roll bar (1") when it is extended into the raised supporting position.

11. A drive according to claim 5, characterised in that the limbs (11) of the roll bar (1', 1") are guided through tubes (16, 16') mounted on and secured to the vehicle body.

12. A drive according to claims 10 and 11, characterised in that the drive motor (3"), the threaded spindle (8'), the spring accumulator (19) and the guide tubes (16') are received in a casing (17') for securing to the vehicle body.

13. A drive according to claim 12, characterised in that the casing (17, 17') can be secured to the partition between the passenger compartment and the luggage compartment.

14. A drive according to claim 10, characterised in that the spring accumulator (19) is made up of pressure springs (20) disposed in the guide tubes (16').

15. A drive according to claim 14, characterised in that a number of pressure springs (20) are disposed one behind the other in each guide tube (16'), and guide members (21) are provided between the springs.

16. A drive according to claim 5, characterised in that the threaded spindle (8') has a steep thread, advantageously with a lead angle ($\beta$) between 35° and 55°.

17. A drive according to claim 16, characterised in that the thread is a double thread.

18. A drive according to claim 5, characterised in that the threaded spindle (8') is drivable by the electric motor (3') via two different gear stages.

19. A drive according to claim 18, characterised in that the electric motor (3") drives a double gearwheel (22) which is axially movable between two shift positions and has a large-diameter inner ring of teeth (23) and a small-diameter outer ring of teeth (24) coaxial with but axially displaced from the inner teeth, and in one gear position the inner teeth (23) and in the other gear position the outer teeth (24) engage a driving gearwheel (25) on the threaded spindle (8').

20. A drive according to claim 1 for a U-shaped roll bar guided for motion in the direction of its downwardly-extending limbs, characterised in that the drive motor (3''') drives a pulley (28) connected to a cable (29), the other end of which is connected to the roll bar (1''').

21. A drive according to claim 20, characterised in that the cable (29) extends from the pulley (28) upwards to a guide pulley (30) and thence downwards to a yoke (10') to which it is fastened and which connects the limbs (11) of the U-shaped roll bar (1''').

22. A drive according to claim 20, characterised in that the pulley (28) has a smaller-diameter portion (31) to which a bracing wire (32) is secured, the other end of the wire being connected to at least one drive spring (33) for assisting the extending motion of the roll bar (1''').

23. A drive according to claim 22, characterised in that the bracing wire (32) is guided by the portion (31) of the pulley (28) upwards towards a guide pulley (34) and thence downwards to the drive spring (33).

24. A drive according to claim 22 or 23, characterised in that the drive spring (33), when tensioned, can be unlocked under the control of a sensor.

25. A drive according to claim 24, characterised in that one end of the drive spring (33) is secured to the vehicle body and the other end bears against the base of a movable spring sleeve (37) which can be locked to and unlocked from the vehicle body.

26. A drive according to claim 25, characterised in that one end of the spring sleeve (37) has an angular slot (38) for a retaining pin (39) secured to the vehicle body, one portion of the slot extending in the direction of displacement and being open towards the edge of the spring sleeve, whereas the other portion of the slot (38) extends approximately transversely.

27. A drive according to claim 26, characterised in that the transverse portion slopes upwards towards the open portion.

28. A drive according to claim 26 or 27, characterised in that the spring sleeve (37) is rotatable to a limited extent from a locking position (Fig. 6) to a release position (Fig. 7).

29. A drive according to claim 28, characterised in that the spring sleeve (37) is rotatable by a dog clutch (40) comprising axial dogs (41) for engagement in longitudinal slots (42) at the edge of the spring sleeve (37).

30. A drive according to claim 29, characterised in that the dog clutch (40), at a radial distance from its axis of rotation, has a bore (48) for engaging a retaining pin (47) movable by an electromagnet (43).

31. A drive according to claim 30, characterised in that the bore (48) is formed in a radial arm (44) of the dog clutch (40).


**Revendications**

1. Entraînement pour à arceau de sécurité d'un véhicule automobile qui, commandé par un capteur, sort rapidement d'une position de repos abaissée en une position d'appui sortie, et commandé volontairement avec une vitesse lente peut se déplacer dans les deux sens entre ces deux positions extrêmes, caractérisé en ce qu'on prévoit un seul et même moteur d'entraînement (3, 3', 3", 3"') pour la sortie commandée par capteur ainsi que pour le déplacement volontaire.

2. Entraînement selon la revendication 1, caractérisé en ce que le moteur d'entraînement est un moteur électrique (3, 3', 3", 3"').

3. Entraînement selon la revendication 2, caractérisé en ce que le moteur (3, 3', 3", 3"') est alimenté avec une tension inférieure à celle de la tension embarquée du véhicule automobile pour le déplacement volontaire, et avec une tension proche de la tension embarquée pour la sortie commandée par le capteur.

4. Entraînement selon la revendication 1 pour un arceau de sécurité pouvant tourner autour d'un axe de rotation, caractérisé en ce que l'arceau de sécurité (1) présente une couronne (4) partielle dentée coaxiale à l'axe de pivotement (2), laquelle vient en prise un pignon (5) entraînable par le moteur d'entraînement (3).

5. Entraînement selon la revendication 1 pour un arceau de sécurité déplaçable approximativement en ligne, caractérisé par une tige filetée (8,8') entraînée par le moteur d'entraînement (3', 3")

s'étendant dans le sens du déplacement, logée axialement vis-à-vis de la structure du véhicule à moteur, tige qui coopère avec un écrou fileté (9, 9') lié à l'arceau de sécurité (1, 1').

6. Entraînement selon la revendication 5 pour un arceau de sécurité en U, dont les pattes du U sont dirigées vers le bas, caractérisé en ce que l'écrou fileté (9, 9') est disposé sur une traverse (10, 10') dont chacune des extrémités est reliée à une patte du U (11).

7. Entraînement selon la revendication 5, caractérisé en ce que sur la traverse (10) est logé un cliquet de verrouillage (12) chargé par un ressort qui, en position sortie de l'arceau de sécurité (l') coopère avec une crémaillère (13) solidaire de la structure.

8. Entraînement selon la revendication 5, caractérisé en ce que la tige filetée (8) est reliée par un accouplement élastique en caoutchouc (14) au moteur électrique (3').

9. Entraînement selon la revendication 5, caractérisé en ce que la tige filetée (8, 8') est logée dans un palier de rotation à son extrémité opposée au moteur électrique (3, 3") sur la structure du véhicule.

10. Entraînement selon la revendication 1, caractérisé en ce qu'on prévoit au moins un ressort accumulateur (19) qui contribue au mouvement de sortie de l'arceau de sécurité (1") en position d'appui redressée.

11. Entraînement selon la revendication 5, caractérisé en ce que l'arceau de sécurité (1', 1") est guidé à l'aide de ses pattes en U (16, 16') par des tubes de guidage (16, 16') appuyés sur la structure.

12. Entraînement selon les revendications 10 et 11, caractérisé en ce que le moteur d'entraînement (3"), la tige filetée (8'), le ressort accumulateur (19) et les tubes de guidage (16') sont logés dans un boîtier (17'), qu'on peut fixer sur la structure du véhicule.

13. Entraînement selon la revendication 12, caractérisé en ce que le boîtier (17, 17') peut être fixé sur la cloison prévue entre l'habitacle et le coffre à bagage.

14. Entraînement selon la revendication 10, caractérisé en ce que le ressort accumulateur (19) est constitué de ressorts de compression (20) disposés dans les tubes de guidage (16').

**15.** Entraînement selon la revendication 14, caractérisé en ce que dans chaque tube de guidage (16') on implante l'un derrière l'autre plusieurs ressorts de compression (20), entre lesquels on prévoit des pièces de guidage (21).

**16.** Entraînement selon la revendication 5, caractérisé en ce que la tige filetée (8') a un filetage à pas rapide de manière appropriée avec un angle de pente (13) compris entre 35° et 55°.

**17.** Entraînement selon la revendication 16, caractérisé en ce que le filetage est un filetage à double pas.

**18.** Entraînement selon la revendication 5, caractérisé en ce que la tige filetée (8') peut être entraînée par le moteur électrique (3'') par l'intermédiaire de deux étages différents de transmission.

**19.** Entraînement selon la revendication 18, caractérisé en ce que le moteur électrique (3'') entraîne une roue à double denture (22) pouvant se déplacer axialement entre deux positions, qui présente une denture interne (23) à grand diamètre et coaxialement, mais avec un décalage axial une petite denture externe (24), dans une position de commutation la denture interne (23) étant en prise et dans l'autre position de commutation la denture externe (24) étant en prise avec une roue dentée d'entraînement (25) de la tige filetée (8').

**20.** Entraînement selon la revendication 1 pour un arceau de sécurité en U qui est guidé en coulissement dans le sens de ses pattes en U dirigées vers le bas, caractérisé en ce que le moteur d'entraînement (3''') entraîne une poulie de câble (28) qui est reliée à un câble de traction (29), qui d'autre part est relié à l'arceau de sécurité (1''').

**21.** Entraînement selon la revendication 20, caractérisé en ce que le câble de traction (29) part vers le haut depuis la poulie de câble (28) sur une poulie de renvoi (30) et de là vers le bas vers une traverse (10') reliant les pattes en U de l'arceau de sécurité (1'''), et sur laquelle il est fixé.

**22.** Entraînement selon la revendication 20, caractérisé en ce que la poulie de câble (28) présente une partie de poulie (31) avec un diamètre d'enroulement plus petit, sur laquelle est fixé un câble de tension (32), dont l'autre extrémité est reliée à au moins un ressort d'entraînement (33) participant au mouvement de sortie de l'arceau de sécurité (1''').

**23.** Entraînement selon la revendication 22, caractérisé en ce que le câble de tension (32) est guidé par la partie de poulie (31) de la poulie de câble (28) vers le haut vers une poulie de renvoi (34) et de là à nouveau vers le bas vers le ressort d'entraînement (33).

**24.** Entraînement selon la revendication 22 ou 23, caractérisé en ce que le ressort d'entraînement (33) est déverrouillable dans son état chargé sous la commande du capteur.

**25.** Entraînement selon la revendication 24, caractérisé en ce que le ressort d'entraînement (33) s'appuie par une extrémité sur la structure et par l'autre extrémité sur le fond d'une gaine de ressort (37) déplaçable, qui peut être verrouillée et déverrouillée de façon solidaire de la structure.

**26.** Entraînement selon la revendication 25, caractérisé en ce que la gaine de ressort (37) présente à une extrémité une fente angulaire (38) pour un tourillon de maintien (39) solidaire de la structure, dont une partie s'étend dans le sens de déplacement et est ouverte vers le bord de la gaine de ressort, l'autre partie de fente (38) s'étendant presque transversalement.

**27.** Entraînement selon la revendication 26, caractérisé en ce que la partie dirigée transversalement vers la partie ouverte s'étend en biais et inclinée vers le haut.

**28.** Entraînement selon la revendication 26 ou 27, caractérisé en ce que la gaine de ressort (37) limitée par une position de verrouillage (figure 6) peut tourner dans une position de libération (figure 7).

**29.** Entraînement selon la revendication 28, caractérisé en ce que la gaine de ressort (37) peut tourner grâce à une rondelle à clabots (40), et elle présente des dents axiales (41) qui viennent en prise dans la fente longitudinale du côté bord (42) de la gaine de ressort (37).

**30.** Entraînement selon la revendication 29, caractérisé en ce que la rondelle à clabots (40) est munie à un écartement radial de son axe de rotation, d'un trou (48) dans lequel une tige de maintien (47) déplaçable longitudinalement par un électro aimant (43) peut venir en prise.

**31.** Entraînement selon la revendication 30, caractérisé en ce que le trou (48) est prévu dans un bras radial (44) de la rondelle à clabots (40).

## Fig. 1

## Fig. 2a

## Fig. 2b

10

_Fig. 3_

_Fig.4_

Fig.5

Fig.6

*Fig.7*

EP 0 459 213 B1

Fig.8

16